# EUROPÄISCHE PATENTANMELDUNG

(11) **EP 4 033 055 A1**
(43) Veröffentlichungstag der Anmeldung: **27.07.2022**
(21) Anmeldenummer: 22150895.5
(22) Anmeldetag: 11.01.2022
(51) Int. Cl.: E04H 17/12

(54) **ZAUNPFAHL SOWIE ZAUN, GEBILDET AUS MEHREREN DERARTIGEN ZAUNPFÄHLEN**

(30) Priorität: 21.01.2021 DE 202021000236 U
(71) Anmelder: Stichting Aandelen Beheer Henk Reinders, 7591BK Denekamp (NL)
(72) Erfinder: Reinders, Henk, 49846 Hoogstede (DE)
(74) Vertreter: Dr. Binder & Binder GbR

(57) **Zusammenfassung**

Die Erfindung betrifft einen Zaunpfahl (1), bestehend aus Kunststoff, wiederverwertetem und aufbereitetem (recyceltem) Kunststoff oder Kunststoff-Verbundwerkstoff, wobei der Zaunpfahl (1) mehrere, einen Winkel (α) miteinander einschließende Schenkel (2, 3, 4, 5) aufweist, wobei in wenigstens einem der Schenkel (2, 3, 4, 5) mindestens ein zur Einführung eines Drahtes (6) ausgebildeter, mit einem Gefälle oder mit einer Neigung zur Vertikalen (9) des Zaunpfahles (1) in den Schenkel (2, 3, 4, 5) eingebrachter, den Schenkel (2, 3, 4, 5) durchsetzender Schlitz (7) vorhanden ist, der endseitig in einen den Schenkel (2, 3, 4, 5) quer durchdringenden Lagerschlitz (8) zur gesicherten Aufnahme des Drahtes (6) übergeht. Weiter betrifft die Erfindung einen Zaun (10), gebildet aus mehreren, erfindungsgemäßen Zaunpfählen (1), wobei in die in ihrer Höhenlage korrespondierenden Schlitze (7) der einzelnen Zaunpfähle (1) mindestens ein die Zaunpfähle (1) verbindender Draht (6) eingelegt ist.

## Beschreibung

Die Erfindung betrifft einen Zaunpfahl sowie einen Zaun, gebildet aus mehreren derartigen Zaunpfählen.

Bekannte Zaunpfähle werden schon aus Kostengründen häufig aus einfachen Materialien wie Holz, Stein oder Metall hergestellt. Zur Einzäunung einer Fläche, also beispielsweise einer Weide, werden mehrere derartige Zaunpfähle mit einem Abstand zueinander in das Erdreich eingeschlagen, wobei anschließend ein Draht zwischen den Zaunpfählen gespannt wird. Bei dem Draht kann es sich zum Beispiel um einen Stacheldraht aus metallischen Werkstoffen handeln, wobei der Draht bei einigen Zäunen auch mit einer Spannungsquelle verbunden ist, sodass der Draht als Elektrodraht eingesetzt wird. Die Zaunpfähle weisen Ösen oder Öffnungen auf, durch die der Draht hindurch gefädelt werden muss, was einen zum Teil erheblichen manuellen- und Zeitaufwand bei der Herstellung eines derartigen Zaunes bedeutet. Insbesondere bei der Verwendung metallischer Zaunpfähle werden die vorhandenen Ösen zur Aufnahme des Drahtes zusätzlich elektrisch isoliert, um die Zaunpfähle gegen den elektrischen Strom abzuschirmen.

Eine Vereinfachung der Isolierung und eine fertigungstechnische Verbesserung derartiger Zaunpfähle wird beispielsweise in der DD 28084 A beschrieben. Aus der Druckschrift ist bereits ein Zaunpfahl für stromführende Zäune, insbesondere für Weidezäune, aus einem Kunststoff bekannt, bei dem aufgrund seiner isolierenden Materialeigenschaften auf eine separate Isolation gegen elektrischen Strom verzichtet werden kann. Bei dem in der DD 28084 A vorgestellten Zaunpfahl handelt es sich um ein Winkelprofil mit einem L-förmigen Querschnitt, sodass hier zwei rechtwinklig voneinander abstehende Schenkel vorhanden sind. In die Schenkel sind jeweils mehrere Schlitze eingebracht, die der Aufnahme je eines Drahtes dienen. Gemäß dem Offenbarungsgehalt der DD 28084 A haben die Schlitze einen rechtwinkligen Verlauf, sodass ein etwa horizontal verlaufender Einführungsschlitz in einen vertikalen, also koaxial zur Längsachse des Zaunpfahles verlaufenden Lagerschlitz übergeht, in den der Draht überführt wird. Dabei ist die Gefahr nicht auszuschließen, dass sich der Draht in unerwünschter Weise selbsttätig aus dem Schlitz löst, was beispielsweise bei durch Wind hervorgerufenen Bewegungen des Drahtes oder in unebenem Gelände und damit einhergehenden Höhenunterschieden zwischen den einzelnen Zaunpfählen eines Zaunes möglich ist. Ebenso ist häufig zu beobachten, dass die eingezäunten Tiere den Draht mit der Schnauze nach oben schieben. Bei der in der DD 28084 A vorgestellten Lösung könnte sich auf diese Weise der Draht aus seiner Fixierung lösen, sodass eine wirksame Absperrung nicht mehr gegeben wäre. Alternativ zu der Schlitzführung des Drahtes werden in der DD 28084 A auch Bohrungen zur Durchführung des Drahtes offenbart. Die Bohrungen weisen dabei den Vorteil auf, dass der Draht sich nicht selbsttätig lösen kann. Hierbei wirkt sich allerdings der Montageaufwand zur Durchführung des Drahtes negativ bei der Herstellung eines Zaunes aus den genannten Zaunpfählen aus.

Der Erfindung liegt die Aufgabe zugrunde, einen Zaunpfahl bereitzustellen, der fertigungstechnisch einfach herstellbar ist und eine zuverlässige Fixierung des Drahtes zur Herstellung eines aus mehreren Zaunpfählen bestehenden Zaunes ermöglicht.

Die Erfindung löst diese Problemstellung mit den Merkmalen des Patentanspruches 1.

Weitere Ausgestaltungen der Erfindung sind Gegenstand der sich anschließenden Unteransprüche.

Ein Zaunpfahl, der aus Kunststoff, aus wiederverwertetem und aufbereitetem, also recyceltem Kunststoff oder aus Kunststoff-Verbundwerkstoff besteht, weist dabei mehrere, einen Winkel miteinander einschließende Schenkel auf, wobei in erfindungsgemäßer Weise in wenigstens einem der Schenkel mindestens ein zur Einführung eines Drahtes ausgebildeter, mit einem Gefälle oder mit einer Neigung zur Vertikalen des Zaunpfahles in den Schenkel eingebrachter, den Schenkel durchsetzender Schlitz vorhanden ist, der endseitig in einen den Schenkel quer durchdringenden Lagerschlitz zur gesicherten Aufnahme des Drahtes übergeht.

Mit der Erfindung gelingt es erstmals, einen Zaunpfahl bereitzustellen, bei dem der zur Herstellung eines aus mehreren Zaunpfählen gebildeten Zaunes erforderliche Draht einfach zu montieren ist, zuverlässig gelagert wird und sich auch bei Bewegungen des Drahtes, bei unebenem Gelände oder bei Berührungen durch die eingezäunten Tiere nicht in unerwünschter Weise aus dem Zaunpfahl herauslösen kann. Hierfür ist durch den Lagerschlitz eine Vertiefung gegeben, in die der zum Einsatz kommende Draht eingelegt ist und folglich nur durch Überwindung eines Überganges wieder aus dem Schlitz entfernt werden kann. Einfacher ausgedrückt wird hier eine Art Schnappverbindung bereitgestellt. Der erfindungsgemäße Zaunpfahl stellt damit einen Beitrag zur Erhöhung der Sicherheit eingezäunter Weidetiere oder der Sicherheit von Passanten dar, die sich dem Zaun nähern. Von besonderem Vorteil hinsichtlich der Sicherheit ist dabei der Umstand, dass der Schlitz mit einem Gefälle oder mit einer Neigung zur Vertikalen des Zaunpfahles in den Schenkel eingebracht ist. Das Gefälle beziehungsweise die Neigung führt in Abhängigkeit von der Ausrichtung des Schlitzes beispielsweise dazu, dass der in den Schlitz eingelegte Draht selbsttätig in seine Endposition innerhalb des Lagerschlitzes gleitet und dort im Sinne der zuvor beschriebenen Schnappverbindung oder Rastung verbleibt. Damit ist auf sehr einfache und zeitsparende Weise die Herstellung eines Zaunes aus mehreren erfindungsgemäßen Zaunpfählen möglich. Im erfindungsgemäßen Sinne ist unter dem "Gefälle" eine Ausrichtung des Schlitzes von seiner Einführungsöffnung ausgehend zur Vertikalen des Zaunpfahls hin zu verstehen, bei der die Einführungsöffnung des Schlitzes somit höher gelegen ist, als das der Vertikalen des Zaunpfahls nähere Ende des Schlitzes. Der Schlitz kann erfindungsgemäß auch eine "Neigung" zur Vertikalen aufweisen, was anders ausgedrückt bedeutet, dass die Neigung des Schlitzes in Querrichtung zur Vertikalen des Zaunpfahls verläuft. Durch die Herstellung des erfindungsgemäßen Zaunpfahles aus einem wiederverwerteten, aufbereiteten, also recycelten Kunststoff kann dieser auch fertigungstechnisch auf einfache Weise erzeugt werden und ist damit im Vergleich mit herkömmlichen Ausführungen insgesamt kostengünstiger. Infolge der Verwendung von Kunststoff oder Kunststoff-Verbundwerkstoffen ist eine Isolierung des zum Einsatz kommenden Drahtes auch dann nicht erforderlich, wenn dieser an eine Spannungsquelle angeschlossen wird und damit als Elektrodraht Verwendung findet. Da der erfindungsgemäße Zaunpfahl aus einem Kunststoff oder Kunststoff-Verbundwerkstoff besteht, kann er zudem in einem Stück erzeugt werden, was fertigungstechnisch besonders einfach ist und darüber hinaus die Möglichkeit schafft, sämtliche Schlitze und Vertiefungen bereits bei der Herstellung des Zaunpfahles in diesen einzubringen. Nacharbeiten oder eine zusätzliche Bearbeitung im Anschluss an den Herstellungsprozess des Zaunpfahls entfallen damit vollständig. Der Zaunpfahl ist insgesamt ein einstückiges Produkt, welches beispielsweise mittels eines Extruders zum Beispiel durch ein Strangpressverfahren hergestellt werden kann.

Entsprechend einer ersten Ausgestaltung der Erfindung wird vorgeschlagen, dass zwischen dem Schlitz und dem Lagerschlitz ein vorsprungartiger Übergang vorhanden ist. Durch den Übergang wird eine verstärkte Schnapp- oder Rastwirkung des Drahtes bei der Einführung in den Lagerschlitz erreicht. Der den Draht aufnehmende Lagerschlitz bildet zudem bevorzugt eine Vertiefung, die auch als sich geometrisch erweiternde Vertiefung des Schlitzes ausgeführt sein kann.

Eine erste Ausführungsvariante des Lagerschlitzes ist erfindungsgemäß darin zu sehen, dass der Lagerschlitz, in den der Schlitz übergeht, parallel zur Vertikalen des Zaunpfahles verläuft. Damit ist der Lagerschlitz senkrecht ausgebildet und kann den in den Schlitz eingeführten Draht aufnehmen, wobei durch die Neigung beziehungsweise das Gefälle des Schlitzes ein Übergang gebildet wird, der den Draht zusätzlich sichert.

Eine besonders einfache Ausführungsvariante des Lagerschlitzes ist gemäß einer Weiterbildung der Erfindung darin zu sehen, dass der Lagerschlitz als geometrische Vertiefung ausgebildet ist oder eine derartige Vertiefung aufweist, die aus einer den Schenkel quer zu der Vertikalen des Zaunpfahles durchdringenden Bohrung zur Aufnahme des Drahtes besteht, wobei der Durchmesser der Bohrung in diesem Fall größer ist, als die Breite des Schlitzes.

Alternativ hierzu kann ein erfindungsgemäßer Zaunpfahl auch dadurch gekennzeichnet sein, dass die den Lagerschlitz bildende Vertiefung durch einen sich an den Verlauf des Schlitzes endseitig anschließenden Bogen oder durch einen unter einem Winkel zur Verlaufsrichtung des Schlitzes verlaufenden Endabschnitt zur Aufnahme des Drahtes gebildet ist. Der Bogen oder der Endabschnitt weicht dabei von der Ausrichtung des Schlitzes ab, sodass der zuvor bereits beschriebene Übergang zur Aufnahme des Drahtes entsteht. Ein derartiger Bogen oder Endabschnitt kann auch so ausgestaltet sein, dass er im Querschnitt betrachtet hakenförmig, also zumindest abschnittsweise in einer Verlaufsrichtung ausgerichtet ist, die vertikal oder entgegen zu dem Gefälle des Schlitzes verläuft.

Durch die Verwendung eines Kunststoffes beziehungsweise eines Kunststoff-Verbundwerkstoffes lässt sich der erfindungsgemäße Zaunpfahl mit einer definierten Festigkeit herstellen, wobei festgestellt werden konnte, dass optimale Werte bei einer Breite von mindestens 100 mm gegeben sind.

Darüber hinaus sind bevorzugte Wandstärken der Schenkel des Zaunpfahls in einem Bereich von mindestens 30 mm gegeben. Die genannten Werte sind dabei nicht einschränkend zu sehen. Vielmehr können auch größere Materialquerschnitte und Geometrien zum Einsatz kommen, wenn dies zum Beispiel erforderlich wird, weil der Draht zur Herstellung eines Zaunes unter einer gewissen Spannung in die Zaunpfähle eingesetzt werden muss, weil beispielsweise größere Entfernungen zwischen zwei benachbarten Zaunpfählen zu überwinden sind.

Aus Festigkeitsgründen ist es von besonderem Vorteil, wenn der Zaunpfahl einen kreuzförmigen Querschnitt mit mehreren, einen Winkel zwischen 45° und 120° miteinander einschließenden Schenkeln aufweist. Dabei kann der Zaunpfahl beispielsweise drei oder vier Schenkel aufweisen, die in der besagten Weise voneinander abstehenden und folglich in einem gemeinsamen, zentralen Schnittpunkt miteinander verbunden sind.

Eine besonders bevorzugte Ausführungsvariante eines erfindungsgemäßen Zaunpfahles ist darüber hinaus darin zu sehen, dass der Zaunpfahl einen kreuzförmigen Querschnitt mit vier, einen rechten Winkel miteinander einschließenden Schenkeln aufweist. Der symmetrische Aufbau eines derartigen Zaunpfahls erlaubt einen nahezu unbegrenzten Einsatzbereich. Darüber hinaus ist die Installation eines Zaunes mit derartigen Zaunpfählen besonders einfach.

Für den Fall besonderer Anforderungen an einen erfindungsgemäßen Zaunpfahl kann entsprechend einer Ausgestaltung der Erfindung der aus Kunststoff oder Kunststoff-Verbundwerkstoff hergestellte Zaunpfahl zu seiner Stabilisierung einen Kern aus einem im Vergleich zum Grundwerkstoff höherfesten Werkstoff aufweisen. Dabei ist insbesondere an einen höherfesten Werkstoff, wie beispielsweise Metall oder Stein gedacht. Der verwendete Kunststoff wird folglich um diesen Kern herumgespritzt beziehungsweise ist der Kern mittels eines Gießverfahrens in den Kunststoff oder Kunststoff-Verbundwerkstoff eingebettet.

Ein erfindungsgemäßer Zaun wird dadurch gebildet, dass dieser aus mehreren Zaunpfählen der zuvor beschriebenen Art besteht, wobei in die jeweils in ihrer Höhenlage miteinander korrespondierenden Schlitze der einzelnen Zaunpfähle mindestens ein die Zaunpfähle verbindender Draht eingelegt ist. Unter korrespondierenden Schlitzen werden dabei die Schlitze verstanden, die ein gleiches Höhenniveau in den einzelnen Zaunpfählen aufweisen.

Wird gemäß einer Ausgestaltung dieser Erfindung zudem der metallische Draht an eine elektrische Spannungsquelle angeschlossen, so handelt es sich bei dem dadurch erzeugten Zaun um einen Elektrozaun, wie er beispielsweise zur Umzäunung einer Weide für Weidetiere geeignet ist.

Die Erfindung wird nachfolgend anhand der beigefügten Zeichnungen näher erläutert. Die gezeigten Ausführungsbeispiele stellen dabei keine Einschränkung auf die dargestellten Varianten dar, sondern dienen lediglich der Erläuterung eines Prinzips der Erfindung. Gleiche oder gleichartige Bauteile werden stets mit denselben Bezugsziffern bezeichnet. Um die erfindungsgemäße Funktionsweise veranschaulichen zu können, sind in den Figuren nur stark vereinfachte Prinzipdarstellungen gezeigt, bei denen auf die für die Erfindung nicht wesentlichen Bauteile verzichtet wurde. Dies bedeutet jedoch nicht, dass derartige Bauteile bei einer erfindungsgemäßen Lösung nicht vorhanden sind.

Es zeigt:
- Figur 1:: eine erste Ausführungsvariante eines Zaunpfahls mit einer kreuzförmigen Querschnittsgeometrie in räumlicher Ansicht,
- Figur 2:: einen speziellen Schlitz gemäß der Ansicht II aus Figur 1,
- Figur 3:: beispielhaft eine weitere Ausführungsvariante eines Zaunpfahls mit einer kreuzförmigen Querschnittsgeometrie in räumlicher Ansicht,
- Figur 4:: den vergrößerten Ausschnitt IV aus Figur 3 mit einem speziellen Verlauf des Schlitzes und des Lagerschlitzes,
- Figur 5:: ein anderes Ausführungsbeispiel eines Schlitzes mit einem bogenförmigen Verlauf des Lagerschlitzes,
- Figur 6:: einen weiteren Schlitz mit einem hakenförmigen Verlauf des Lagerschlitzes,
- und Figur 7:: einen Zaun, bestehend aus mehreren Zaunpfählen.

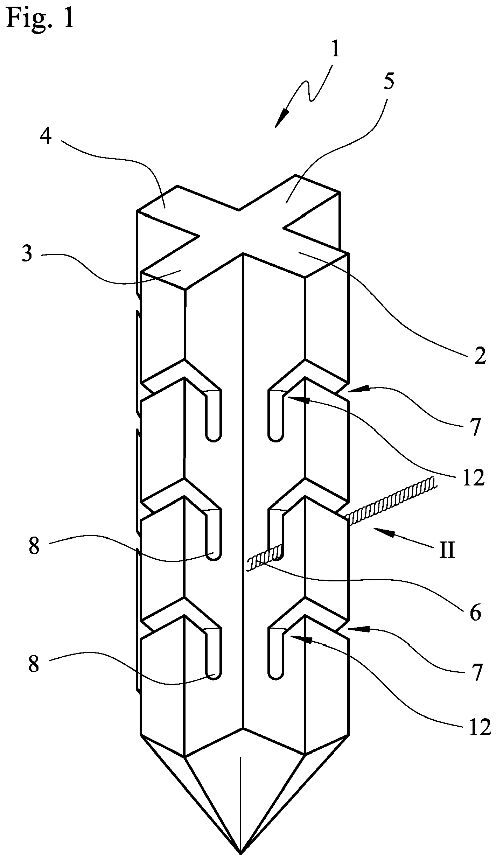

Der in der Figur 1 dargestellte Zaunpfahl 1 verfügt über einen kreuzförmigen Querschnitt, bei dem insgesamt vier Schenkel 2, 3, 4, 5, ausgehend von einem gemeinsamen Zentrum in einem rechten Winkel zueinander ausgerichtet sind. Bei dem Zaunpfahl 1 in Figur 1 weisen folglich die Schenkel 2, 3, 4, 5 einen Winkel α (Alpha) mit einem Betrag von 90° zueinander auf. Der Zaunpfahl 1 verfügt dabei insgesamt über eine symmetrische Geometrie, sodass der Zaunpfahl 1 in jeder Richtung eine gleiche Breite aufweist. In vertikaler Richtung des Zaunpfahls 1 betrachtet sind in jeden der vorhandenen Schenkel 2, 3, 4, 5 jeweils mehrere, hier mit gleichem Abstand zueinander verlaufende Schlitze 7 eingebracht, deren Besonderheit darin besteht, dass sie mit Bezug zur Vertikalen 9 des Zaunpfahles 1 betrachtet ein seitlich verlaufendes Gefälle aufweisen. Die Breite der Schlitze 7 ist dabei so ausgelegt, dass ein in der Figur 1 lediglich beispielhaft dargestellter Draht 6 mit geringem Spiel in die Schlitze 7 eingeführt werden kann. Der Draht 6 kommt jeweils erst nach Überwindung eines bevorzugt scharfkantigen Überganges 12 in einer den Lagerschlitz 8 des Schlitzes 7 bildenden Vertiefung zur Einlage. In dem Lagerschlitz 8 ist der Draht 6 dadurch gesichert aufgenommen, sodass er sich nicht mehr selbsttätig aus dem Schlitz 7 herauslösen kann.

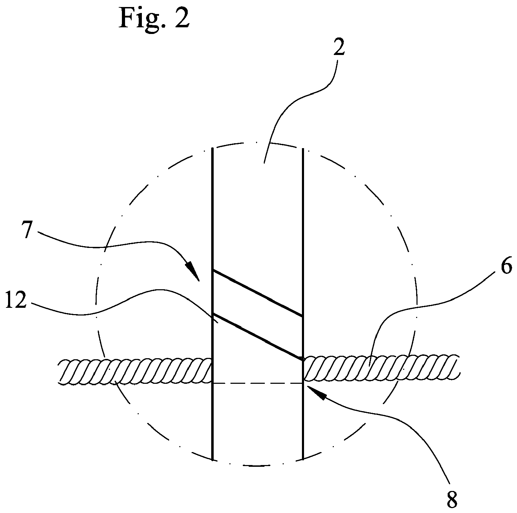

Aus der Figur 2 geht die vergrößerte Ansicht II aus Figur 1 des Schlitzes 7 hervor, der bei dem dargestellten Beispiel in den Schenkel 2 des Zaunpfahles 1 eingebracht ist. Aus dieser Darstellung wird deutlich, dass der Schlitz 7 mit einer seitlichen Neigung zur Vertikalen des Zaunpfahles 1 verläuft und eine Breite aufweist, die ausreichend ist, den lediglich andeutungsweise dargestellten Draht 6 in den Schlitz 7 einzuführen, wobei der Draht 6 anschließend, also nach Überwindung des scharfkantig ausgeführten Überganges 12 in dem Lagerschlitz 8 zur Einlage kommt, der in der Figur 2 lediglich durch eine gestrichelte Linie angedeutet ist und annähern horizontal verläuft.

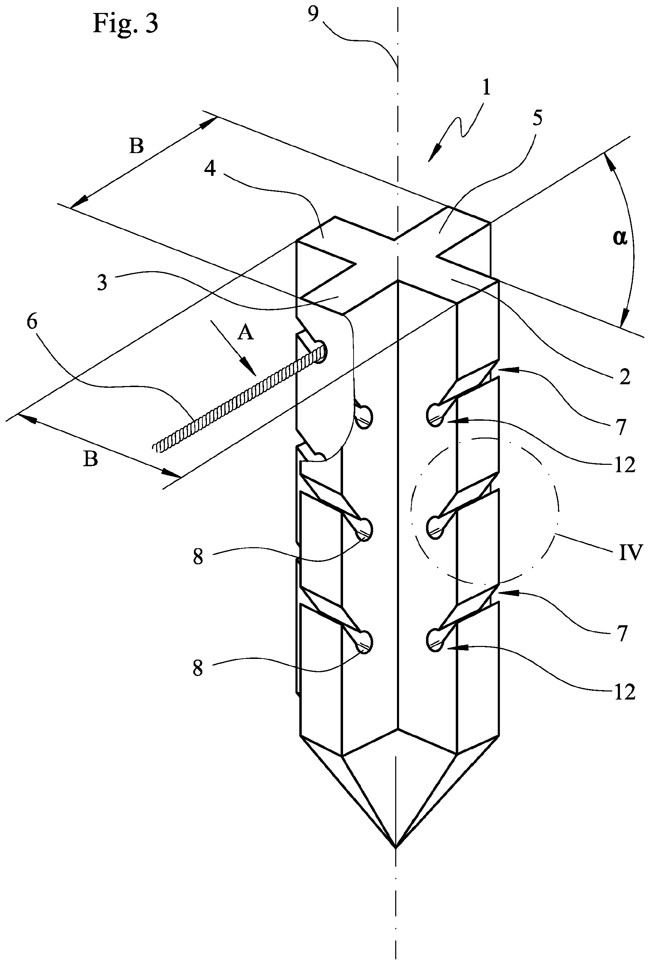

Der in der Figur 3 dargestellte Zaunpfahl 1 verfügt ebenfalls über einen kreuzförmigen Querschnitt, bei dem insgesamt vier Schenkel 2, 3, 4, 5, ausgehend von einem gemeinsamen, durch die Vertikale 9 des Zaunpfahles 1 gebildeten Zentrum in einem rechten Winkel zueinander ausgerichtet sind. In vertikaler Richtung des Zaunpfahls 1 betrachtet sind auch hier in jeden der vorhandenen Schenkel 2, 3, 4, 5 jeweils mehrere, mit gleichem Abstand zueinander verlaufende Schlitze 7 eingebracht, deren Besonderheit vorliegend darin besteht, dass sie mit Bezug zur Vertikalen 9 des Zaunpfahles 1 betrachtet, ein Gefälle zum Zentrum beziehungsweise zu der Vertikalen 9 des Zaunpfahles 1 hin, aufweisen. Die Breite der Schlitze 7 ist dabei so ausgelegt, dass je ein Draht 6 in die entsprechenden Schlitze eingeführt werden kann. Der Draht 6 wird in Richtung des Pfeils A in den jeweiligen Schlitz 7 eingeführt und kommt nach Überwindung eines Überganges 12 in einer den Lagerschlitz 8 des Schlitzes 7 bildenden Vertiefung zur Einlage. In dem Lagerschlitz 8 ist der Draht 6 mittels des Überganges 12 gesichert aufgenommen, sodass er sich nicht mehr selbsttätig aus dem Schlitz 7 herauslösen kann. Bei der den Lagerschlitz 8 bildenden Vertiefung handelt es sich im vorliegenden Fall um eine den jeweiligen Schenkel 2, 3, 4, 5 durchdringende Durchgangsbohrung.

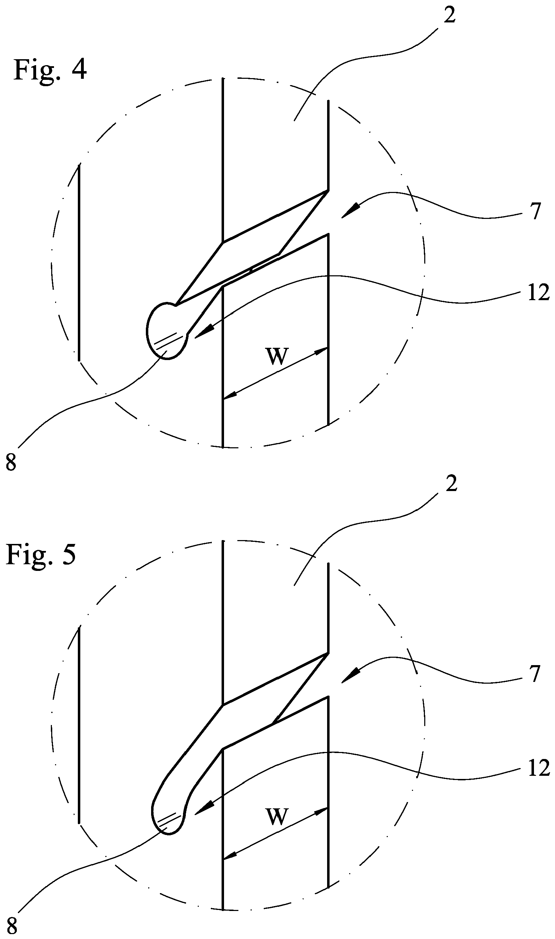

Aus der Figur 4 geht der vergrößerte Ausschnitt IV aus Figur 3 hervor, wobei der Schlitz 7 bei dem dargestellten Beispiel in den Schenkel 2 des Zaunpfahles 1 eingebracht ist. Aus dieser Darstellung wird noch einmal deutlich, dass der Schlitz 7 schmaler ausgeführt ist, als die sich an sein Ende anschließende Vertiefung, die den Lagerschlitz 8 bildet und die ihrerseits aus einer Durchgangsbohrung besteht. In der Darstellung der Figur 4 ist auch die Wandstärke W des Schenkels 2 angedeutet, die bei dem gezeigten Beispiel 30 mm beträgt.

Eine weitere, alternative Ausführungsvariante des Schlitzes 7 ist in der Figur 5 gezeigt. Der Schlitz 7 geht dabei an seinem Ende, das heißt, im Bereich seines Lagerschlitzes 8, in eine Bogenform über, die zusammen mit dem Schlitz 7 eine annähernd hakenförmige Gestalt aufweist. Dabei muss der in den Schlitz 7 eingeführte Draht 6 zunächst den in diesem Fall gleichmäßig ausgeführten Übergang 12 überwinden. Durch das Gefälle des Schlitzes 7 gleitet der Draht 6 selbsttätig in den Lagerschlitz 8 und ist dort gesichert aufgenommen, sodass er sich nicht in unerwünschter Weise selbsttätig aus dem Schlitz 7 herauslösen kann.

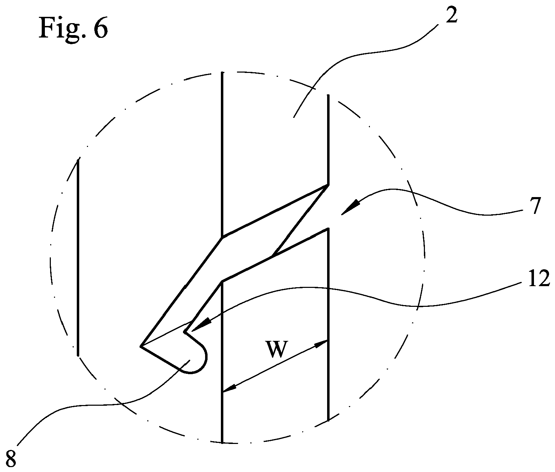

Eine weitere alternative Ausführungsvariante des Lagerschlitzes 8 geht aus der Figur 6 hervor. Der Schlitz 7 geht dabei an seinem Ende, das heißt, im Bereich seines Lagerschlitzes 8, in einen Endabschnitt über, der zusammen mit dem Schlitz 7 eine hakenförmige Gestalt mit einem eher scharfkantigen Übergang 12 aufweist. Dadurch kann in verbesserter Weise erreicht werden, dass der in den Schlitz 7 eingeführte Draht 6 durch das Gefälle des Schlitzes 7 selbsttätig in den Lagerschlitz 8 überführt wird und dort gesichert aufgenommen ist.

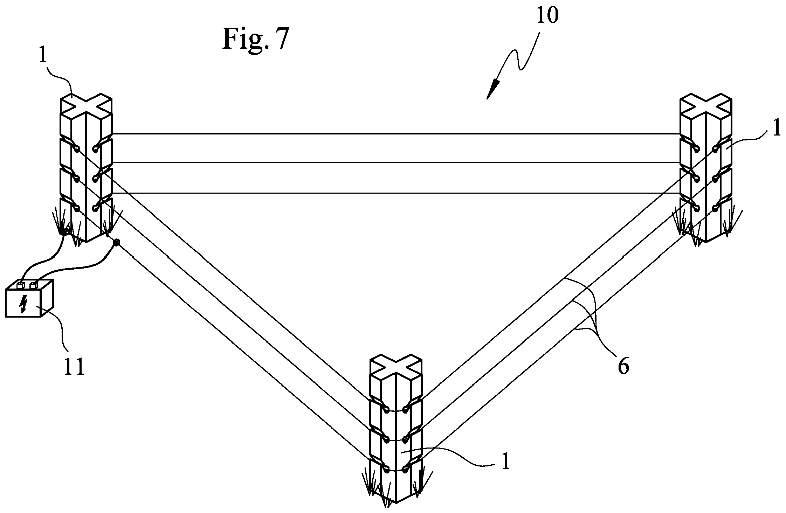

In der Figur 7 ist schließlich ein insgesamt mit der Bezugsziffer 10 bezeichneter Zaun dargestellt, der aus mehreren Zaunpfählen 1 besteht. Ein derartiger, beispielsweise als Weidezaun dienender Zaun 10 weist zwischen den einzelnen Zaunpfählen 1 mit einem jeweiligen Höhenabstand zueinander angeordnete Drähte 6 auf, die im erfindungsgemäßen Sinne jeweils in die Schlitze 7 der Zaunpfähle 1 eingelegt sind und durch die spezielle Ausführung der Schlitze 7 in dem Lagerschlitz 8 zur Einlage kommen. Bei dem in Figur 7 gezeigten Zaun 10 handelt es sich um einen Elektrozaun, sodass an wenigstens einem der Drähte 6 eine Spannungsquelle 11 angeschlossen ist, die einen elektrischen Strom erzeugt oder bereitstellt.

### BEZUGSZEICHENLISTE:

- 1: Zaunpfahl
- 2: Schenkel
- 3: Schenkel
- 4: Schenkel
- 5: Schenkel
- 6: Draht
- 7: Schlitz
- 8: Lagerschlitz
- 9: Vertikale (des Zaunpfahles)
- 10: Zaun
- 11: Spannungsquelle
- 12: Übergang

- A: Einführungsrichtung des Drahtes
- B: Breite des Zaunpfahles
- W: Wandstärke der Schenkel

## Patentansprüche

1. Zaunpfahl (1), bestehend aus Kunststoff, wiederverwertetem und aufbereitetem (recyceltem) Kunststoff oder Kunststoff-Verbundwerkstoff, wobei der Zaunpfahl (1) mehrere, einen Winkel (α) miteinander einschließende Schenkel (2, 3, 4, 5) aufweist,
**dadurch gekennzeichnet, dass**
in wenigstens einem der Schenkel (2, 3, 4, 5) mindestens ein zur Einführung eines Drahtes (6) ausgebildeter, mit einem Gefälle oder mit einer Neigung zur Vertikalen (9) des Zaunpfahles (1) in den Schenkel (2, 3, 4, 5) eingebrachter, den Schenkel (2, 3, 4, 5) durchsetzender Schlitz (7) vorhanden ist, der endseitig in einen den Schenkel (2, 3, 4, 5) quer durchdringenden Lagerschlitz (8) zur gesicherten Aufnahme des Drahtes (6) übergeht.

2. Zaunpfahl nach Anspruch 1,
**dadurch gekennzeichnet, dass**
zwischen dem Schlitz (7) und dem Lagerschlitz (8) ein vorsprungartiger Übergang (12) vorhanden ist.

3. Zaunpfahl nach einem der vorstehend genannten Ansprüche 1 oder 2, **dadurch gekennzeichnet, dass**
der Lagerschlitz (8) parallel zur Vertikalen des Zaunpfahles verlaufend ausgerichtet ist.

4. Zaunpfahl nach einem der vorstehend genannten Ansprüche 1 oder 2, **dadurch gekennzeichnet, dass**
der Lagerschlitz (8) durch eine den Schenkel (2, 3, 4, 5) quer zu der Vertikalen (9) durchdringende Bohrung zur Aufnahme des Drahtes (6) gebildet ist, wobei der Durchmesser der Bohrung größer ist, als die Breite des Schlitzes (7).

5. Zaunpfahl nach einem der vorstehend genannten Ansprüche 1 oder 2, **dadurch gekennzeichnet, dass**
der Lagerschlitz (8) durch einen sich an den Verlauf des Schlitzes (7) endseitig anschließenden Bogen oder durch einen unter einem Winkel zur Verlaufsrichtung des Schlitzes (7) verlaufenden Endabschnitt zur Aufnahme des Drahtes (6) gebildet ist.

6. Zaunpfahl nach einem der vorstehend genannten Ansprüche,
**dadurch gekennzeichnet, dass**
der Zaunpfahl (1) eine Breite (B) von mindestens 100 mm aufweist.

7. Zaunpfahl nach einem der vorstehend genannten Ansprüche,
**dadurch gekennzeichnet, dass**
die Schenkel (2, 3, 4, 5) des Zaunpfahls (1) eine Wandstärke (W) von mindestens 30 mm aufweisen.

8. Zaunpfahl nach einem der vorstehend genannten Ansprüche,
**dadurch gekennzeichnet, dass**
der Zaunpfahl (1) einen kreuzförmigen Querschnitt mit mehreren, einen Winkel (α) zwischen 45° und 120° miteinander einschließenden Schenkeln (2, 3, 4, 5) aufweist.

9. Zaunpfahl nach einem der vorstehend genannten Ansprüche,
**dadurch gekennzeichnet, dass**
der Zaunpfahl (1) einen kreuzförmigen Querschnitt mit vier, einen rechten Winkel (α = 90°) miteinander einschließenden Schenkeln (2, 3, 4, 5) aufweist.

10. Zaunpfahl nach einem der vorstehend genannten Ansprüche,
**dadurch gekennzeichnet, dass**
der aus Kunststoff oder Kunststoff-Verbundwerkstoff hergestellte Zaunpfahl (1) zu seiner Stabilisierung einen Kern aus einem im Vergleich zum Grundwerkstoff höherfesten Werkstoff aufweist.

11. Zaunpfahl nach Anspruch 10,
**dadurch gekennzeichnet, dass**
der höherfeste Werkstoff Metall oder Stein ist.

12. Zaun (10), gebildet aus mehreren Zaunpfählen (1) nach einem der vorstehend genannten Ansprüche,
**dadurch gekennzeichnet, dass**
in die in ihrer Höhenlage korrespondierenden Schlitze (7) der einzelnen Zaunpfähle (1) mindestens ein die Zaunpfähle (1) verbindender Draht (6) eingelegt ist.

13. Zaun nach Anspruch 12,
**dadurch gekennzeichnet, dass**
der metallische Draht (6) an eine elektrische Spannungsquelle (11) angeschlossen ist, sodass der Zaun (10) ein Elektrozaun ist.
